# EUROPEAN PATENT SPECIFICATION

(11) **EP 0 780 050 B1**
(45) Date of publication and mention of the grant of the patent: **09.08.2000**
(21) Application number: 96203591.1
(22) Date of filing: 17.12.1996
(51) Int. Cl.: A01D 45/02

(54) **Row crop attachment for forage harvester**
Reihenpflanzengerät für Feldhäcksler
Dispositif de plantes en rangs pour récolteuse-hacheuse

(30) Priority: 21.12.1995 US 9166; 21.12.1995 US 9168
(43) Date of publication of application: 25.06.1997
(73) Proprietor: NEW HOLLAND BELGIUM N.V., B-8210 Zedelgem (BE)
(72) Inventor: Wagstaff, Robert A., Lancaster, PA 17601 (US); Hall, Larry D., New Holland, PA 17557 (US)
(74) Representative: Vandenbroucke, Alberic

(56) References cited:
- US-A- 3 023 560
- US-A- 3 126 691
- US-A- 5 161 355

## Description

The present invention relates generally to forage harvesters and more particularly to an attachment for a forage harvester base unit for cutting randomly spaced standing row crop material and conveying it to the base unit.

A typical forage harvester operating in matured crops growing in rows, such as corn or the like, includes a mobile base unit and a row crop header attached to the base unit for cutting, gathering, and conveying crop material rearwardly to the base unit. The base unit includes a forward generally rectangular inlet opening for receiving crop material being conveyed rearwardly, a feeding assembly spanning the width of the inlet opening to engage the conveyed crop material, and a crop processor including a rotating cutterhead for receiving crop material from the feeding assembly and chopping it into small pieces, which constitutes the end product that is transferred to a wagon for transport to a storage facility, such as a silo.

The header attachment is mounted on the front of the base unit and has a rear, generally centrally located discharge outlet in communication with the inlet opening on the base unit. As is well known, the stalks of the row crop being harvested are cut near the ground by a cutting assembly on the header attachment, after which the cut crop is gathered and delivered rearwardly through the central discharge outlet and into the feeding assembly on the base unit. During the time the crop material is being conveyed the stalks are manipulated by the gathering and feeding means in a manner such that the cut ends of the stalks of the crop material, or stalk butts, are presented first to the feeding assembly. Thus, the crop material is fed, stalk butts first, to the cutterhead by the feeding assembly, which commonly comprises one or more pairs feed rolls mounted transversely across the inlet of the base unit.

It is not uncommon for an operator of a forage harvester to be confronted with different spacing between the rows of standing crop as he moves from one field to another. Furthermore, non uniform row spacing may be encountered in the same field during successive passes due to adverse planting conditions, unreliable row spacing integrity of the planting apparatus, etc. Unless the operator somehow compensates for such differences the standing crops are not likely to be aligned properly with the header stalkways that guide the crop rearwardly in typical row crop attachments.

Various efforts have been made in the past to overcome this problem. For example, the areas between the leading portions of adjacent crop receiving elements have been enlarged and extended forwardly to engage and urge standing crops to the cutters regardless of row spacing. This type of apparatus tends to be ineffective under conditions where there are wide variations between row spacing and is also undesirable due to the additional bulk.

Other attempts to solve the problem involve the utilization of units in which the crop passages are laterally adjustable, such as shown for exemplary purposes in US-Re 31,063 and US-A-4,084,396.

Another approach in the past has been to provide a row crop attachment that is not sensitive to the spacing of standing crop material regardless of distance between the rows. Examples of apparatus of this nature are shown in US-A-4,622,804 and US-A-4,926,623. In US-A-4,622,804, a chain driven mechanism is operative transverse to the direction of travel to cut standing crop and convey it transversely to a chopping assembly. US-A-4,926,623 discloses apparatus in which a pair of counter rotating cutting assemblies engage stalk-like crops independently of row spacing and employ opposing truncated cone members to guide the cut crop material rearwardly to a centrally located chopper.

US-A-4,594,842 and US-A-5,237,804 are further examples of prior art forage harvester row crop attachments that are not sensitive to the spacing between the rows of standing crop being harvested. In these patents, assigned to a common assignee, pairs of counter rotating cutting assemblies operate in a manner similar to the above discussed patent US-A-4,926,623. In the first instance the counter rotating cutting assemblies cooperate with opposed sloping conveyor drums, forward of processor feed rolls, while in the latter instance there are no means intermediate the cutting assemblies and the processor feed rolls.

These efforts in the past to solve the problem of providing forage harvester row crop attachment apparatus that accommodates randomly spaced crops, have either resulted in mechanisms that require time consuming and inconvenient mechanical adjustments or have yielded solutions fraught with difficulties spawned by complex endeavors to provide an acceptable solution.

US-A-3,023,560 shows a forage harvester having a fixed header which is designed for the harvesting of grasses, including clover, alfalfa and other grassland crops. A transverse cutterbar cuts the crop and an auger transports the same sideways to the inlet of crop processing means arranged behind the header. This arrangement works well for grassland crops, but it cannot cope with stalk crops such as corn. Because of their length, the corn stalks have a center of gravity at a height above the axis of the auger and when they are cut, they tend to fall forwardly, free of the action of the auger. The fallen stalks are likely to be cut a second time by the advancing cutterbar and a portion of the stalks will end below the header. Consequently, only a portion of the harvested crop will finally be fed to the crop processing means. Such crop losses are unacceptable under all circumstances.

An important object of the present invention is to overcome the problems mentioned above and provide simple and reliable forage harvester row crop attachment apparatus that results in enhanced performance.

According to the invention there is provided a row crop attachment for a field traversing forage harvester having a crop inlet for receiving cut row crop material comprising a lower stalk portion and an upper stalk portion, said row crop attachment comprising:
a main frame adapted to be attached to said forage harvester, said main frame including a crop outlet for installation adjacent said crop inlet for receiving cut row crop material;
an auger mounted on said main frame generally transverse to the direction of travel of the forage harvester;
means for rotating said auger;
said auger comprising a tube and flighting mounted on said tube for urging the upper portion of standing row crop material downwardly and transversely, as said attachment is travelled over a field in which rows of crop are standing; and
a transverse cutting assembly including cutting means for cutting the lower stalk portion of said standing row crop and mounted below said auger;
stalk engaging elements, mounted forward of said cutting assembly for engaging the lower stalk portion and guiding said lower stalk portion to said cutting means and
mounted below below said auger for cooperating with said flighting to guide said lower stalk portion to said cutting means under conditions where said auger is rotated in a direction to urge the crop material downwardly and transversely toward said crop outlet; and
said attachment further comprising means for grasping said lower portions of said standing row crop under conditions where said stalk engaging elements are cooperating with said flighting to guide the lower portions of said standing row crop to said cutting means.

These grasping means improve the sideways transport of the stalks. Such grasping means may be mounted rearward of the stalk engaging elements and may comprise a surface element, which is spaced a predetermined distance of the flighting and extends between these elements and the floor below the auger. Advantageously this surface element may extend in a direction which is inclined to said direction of travel, e.g. at an angle which is substantially equal to the pitch angle of the flighting.

The cutting assembly is mounted directly under the auger tube. Enhanced control of the stalk movement may be obtained by employing a flighting constituted by a plurality of equally spaced segments. When the outlet is located in the middle portion of the attachment, crop material may be conveyed thereto by two sets of flighting on both sides of attachment. Inbetween the two sets of flighting feed elements may be installed for assisting in transporting the cut crop to the outlet.

A row crop attachment according to the invention will now be described in greater detail and by way of example with reference to the accompanying drawings wherein:
Figure 1 is a plan view of a forage harvester attachment, in which the present invention is embodied;
Figure 2 is a view taken in the direction of arrows 2-2 in Figure 1;
Figure 3 is a view taken in the direction of arrows 3-3 in Figure 1;
Figure 4 is a view taken in the direction of arrows 4-4 in Figure 2;
Figure 5 is a diagrammatical side view of a crop guide assembly and cutter assembly; and
Figure 6 is a diagrammatical plan view illustrating the relationship between a crop guide assembly and row crop material being harvested.

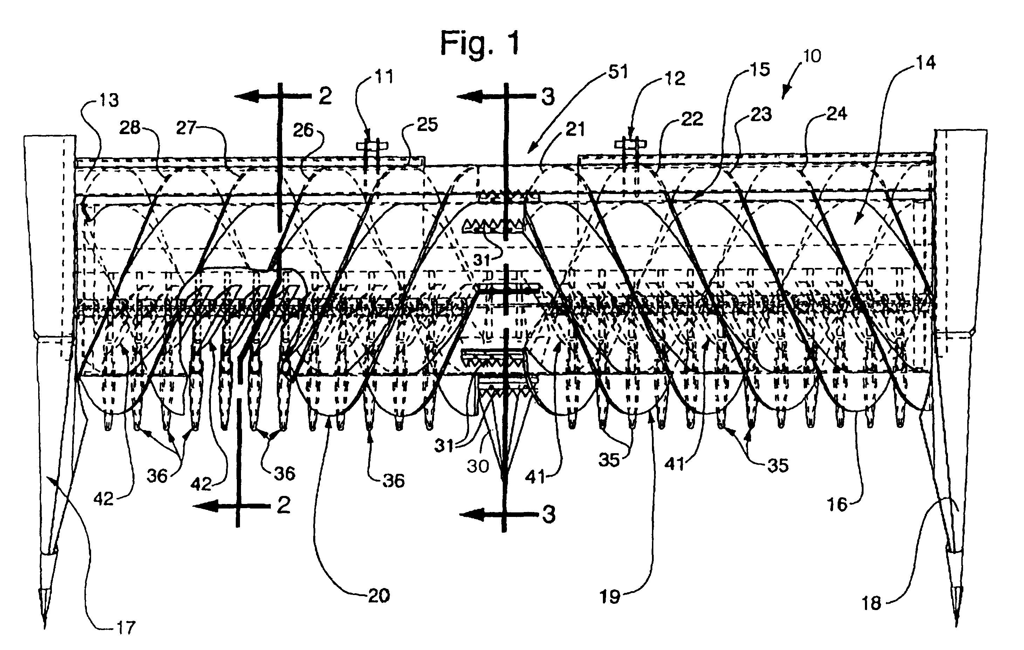

Figure 1 shows a top view of a forage harvester row crop attachment, generally designated by reference numeral 10, in which the invention is embodied. Attachments of this type are generally referred to as forage harvester headers.

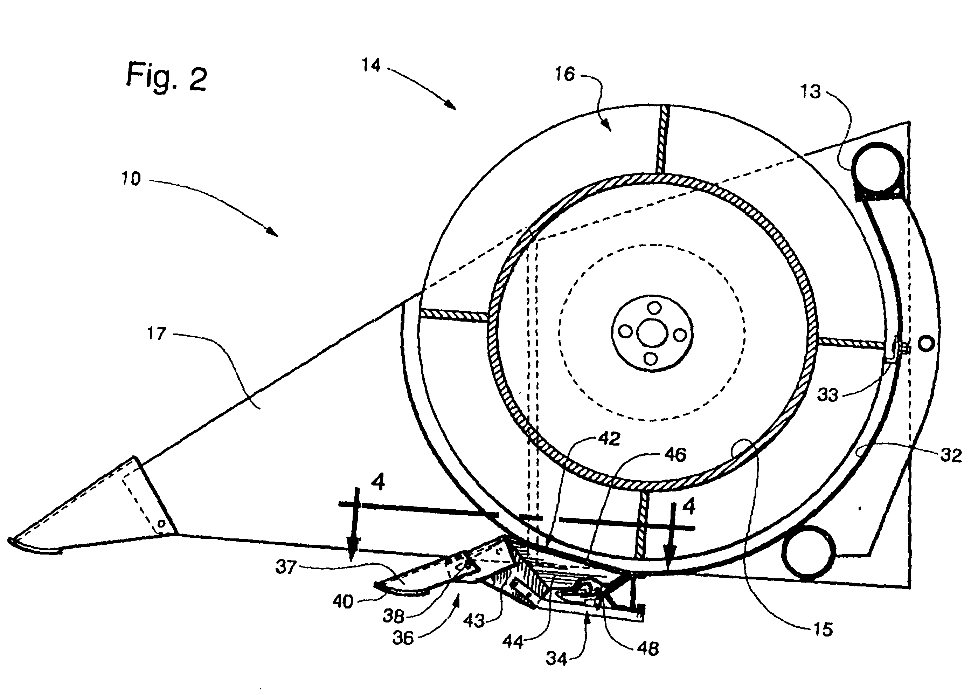

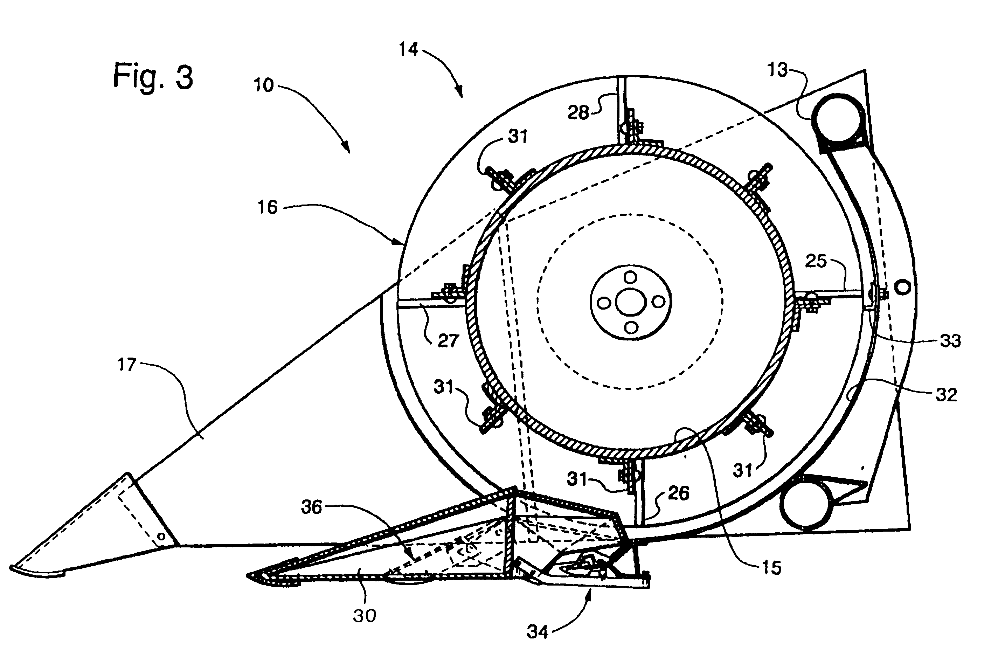

Attachment 10, adapted for mounting on a forage harvester base unit via mounting brackets 11, 12, comprises a main frame including a transverse beam 13 and various other structural elements, such as integral bracket assemblies and walls, for supporting the components of the attachment in a known manner. An auger 14, comprising a tube 15 and flighting, generally designated by reference numeral 16, is mounted on the main frame transversely between outer crop dividers 17 and 18. A drive assembly, typically consisting of belts, chains and/or gearing, (not shown) is mounted on the main frame in a conventional manner for rotating auger 14 in a counter-clockwise direction when viewing the attachment from the left as shown in Figures 2 and 3.

Auger 14 has left and right sections 19, 20 (taken in reference to the direction of travel) on each of which sections flighting 16 has four similar segments 21, 22, 23, 24 and 25, 26, 27, 28, respectively, affixed at equally spaced locations. The flighting on section 19 is wound in opposition to the flighting on section 20, with the inward ends terminating on tube 15 rearwardly of a centrally located divider 30 affixed to the frame. The inward ends of segments 25, 26, 27, 28 of right section 20 terminate at 90 degree intervals as shown in Figure 3, while the inward ends of segments 21, 22, 23, 24 of left section 19 terminate in axially spaced relation and staggered with respect to the segments on the right section. A plurality of serrated feed elements 31 are attached to tube 15 between the inward ends of the flighting segments. Elements 31 are staggered axially and each one is affixed adjacent the inward end of a flighting segment.

A semi circular floor 32 is mounted on the frame and extends from transverse beam 13 downwardly and forwardly. Floor 32 is uniformly spaced from the path of the outer edges of flighting 16. Approximately opposite the centre of auger tube 15, a scraper 33 having a flange extending in close adjacency with the outer edge of flighting 16, is mounted on floor 32.

A standard reciprocating sickle bar cutter assembly 34, extending between the outer crop dividers and below auger 14, is driven in a conventional manner. Forward of sickle bar 34 and below auger sections 19, 20 are a plurality of identical stalk engaging elements 35, 36, respectively. For the purposes of this description, one of the stalk engaging element 36 is shown in detail in Figures 2, 4 and 5. It includes a snout 37 pivotable about pivot 38 to adapt skid 40 to accommodate varying terrain conditions.

Unique guide elements 41, 42 are mounted rearwardly and in association with each stalk engaging element 35, 36, respectively. Guide element 42, depicted in Figures 2, 4 and 5, is configured as a mirror image of guide element 41, the purpose for which will become apparent in the functional description that follows. The elements each include three quadrilaterally configured flat surfaces. The first surface consists of a generally vertical surface 43 which is secured to stalk engaging element 36 and generally aligned therewith to serve as a continuation of its associated stalk engaging element. Surface 43 is integral with a quadrilateral transition surface 44 at common edge 45, and a third quadrilateral gripping surface 46 is integral with surface 44 and likewise has a common edge 47. Surface 44 is cut away at 48 to accommodate the cutter bar assembly. Of particular significance is the close proximity of gripping surface 46 and edge 47 to the path of the outer edges of the flighting segments, as illustrated by Figure 2, which is approximately the same spacing as that which is between the floor and flighting. Thus, rear edge 50 of surface 46 terminates in close proximity to the front edge of floor 32 whereupon the spacing or gap between such floor and the cylindrical path of the outer edge of the flighting remains about the same. It should be noted that even though quadrilateral surfaces 43, 44, 46 are flat, non-flat variations in such surfaces could also be utilized.

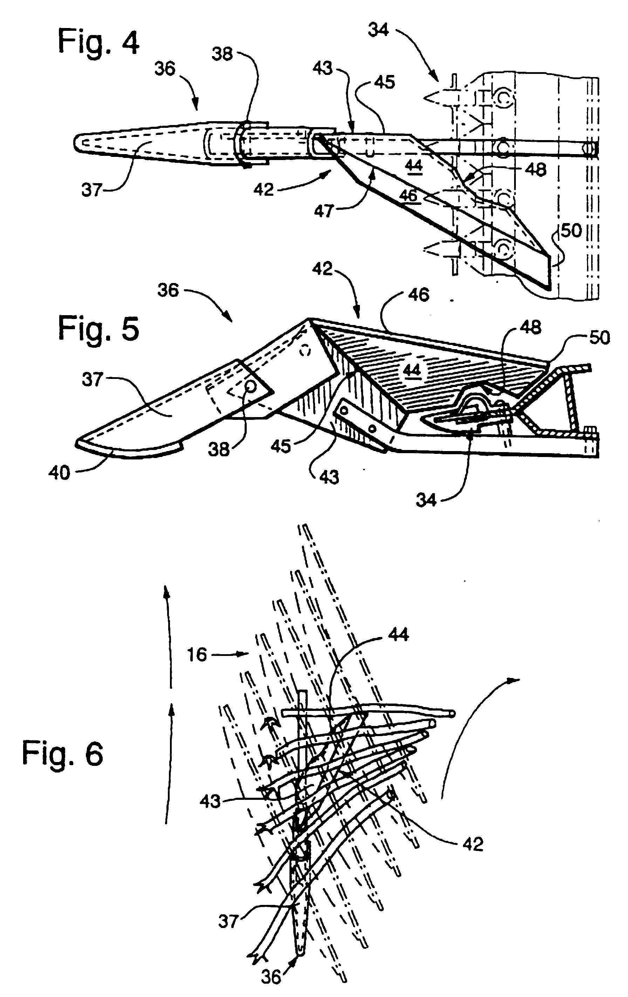

In operation, standing row crop may be spaced at various distances. Stalk engaging elements 35, 36, spaced 15 cm apart in the preferred embodiment, are moved forwardly as the harvester and attachment traverse the field during harvesting. The upper portion of the standing crop first engages auger 14, regardless of its transverse position relative to the stalk engaging elements. As a particular stalk of crop is captured between adjacent stalk engaging elements the attachment continues forward until such upper portion of the stalk of the standing crop is engaged by the flighting which urges it downwardly and inwardly, while still rooted in the field, i.e., the stalks begin to lean toward the centre of the attachment, as illustrated by Figure 6. Simultaneously, as flighting 16 engages such stalk extending generally upwardly, the tube pushes the upper part of the stalk forwardly. As the attachment and harvester continue to proceed down the field the lower portion of the stalk becomes engaged in the gap between the outer edge of the adjacent flighting and surface 46 of guide element 42 which, by virtue of predetermined spacing equal to the approximate diameter of an average stalk, serves to grip it securely prior to and during cutting by cutting assembly 34. The stalk is so gripped as the flighting continues to urge it downwardly and rearwardly toward the centre of the attachment as the top of the stalk is being pushed forward. While cutting takes place, the stalk of the crop material is, in effect, laid into position to be conveyed rearwardly and inwardly by the flighting to the crop inlet of the harvester with the butt end of the cut stalk preceding the remainder of the stalk. The spacing between the floor and the cylindrical path of the outer edges of the flighting is the same as the gap between the guide elements and the flighting, whereupon the cut stalks are continuously gripped until the butts arrive at a crop outlet 51 in the attachment adjacent the inlet. In the unlikely event that a stalk is not properly fed to outlet 51 in the rear of the floor, scraper 33 will engage the butt and urge it to the centre in cooperation with the auger flighting. This is a commonly known aspect of present day augers used in various other applications.

Of the many implicit and explicit advantages of the present invention one of the most important is the provision of a uncomplicated, reliable, cost effective design for a forage harvester attachment for gathering, cutting and feeding row crop material regardless of the spacing between the rows. It is especially effective in avoiding losses when crop stalks are askew from the normal vertical field condition which thereby contributes to overall forage harvester efficiency by so enhancing general operating characteristics of the attachment.

While preferred structure in which the principles of the present invention are shown and described above, it is to be understood that the invention is not limited to such structure, but that, in fact, widely different means of varying scope and configuration may be employed in the practice of the invention.

For example the invention may be embodied in an attachment having an outlet near one side of the frame and an auger equipped with one set of flighting segments for urging the cut stalks of crop material in only one direction towards the outlet.

## Claims

1. A row crop attachment (10) for a field traversing forage harvester having a crop inlet for receiving cut row crop material comprising a lower stalk portion and an upper stalk portion, said row crop attachment (10) comprising:
a main frame adapted to be attached to said forage harvester, said main frame including a crop outlet (51) for installation adjacent said crop inlet for receiving cut row crop material;
an auger (14) mounted on said main frame generally transverse to the direction of travel of the forage harvester;
means for rotating said auger (14);
said auger (14) comprising a tube (15) and flighting (16) mounted on said tube for urging the upper portion of standing row crop material downwardly and transversely, as said attachment (10) is travelled over a field in which rows of crop are standing; and
a transverse cutting assembly (34) including cutting means for cutting the lower stalk portion of said standing row crop and mounted below said auger (14);
stalk engaging elements (35, 36), mounted forward of said cutting assembly (34) for engaging the lower stalk portion and guiding said lower stalk portion to said cutting means and
mounted below said auger (14) for cooperating with said flighting (16) to guide said lower stalk portion to said cutting means under conditions where said auger (14) is rotated in a direction to urge the crop material downwardly and transversely toward said crop outlet (51); said attachment being characterized in that it further comprises means (41, 42) for grasping said lower portions of said standing row crop under conditions where said stalk engaging elements (35, 36) are cooperating with said flighting (16) to guide the lower portions of said standing row crop to said cutting means.

2. A row crop attachment according to Claim 1, characterized in that the outer edge of said flighting (16) travels in a cylindrical path, and said transverse cutting assembly (34) is rearward of the forwardmost portion of said cylindrical path.

3. A row crop attachment according to Claim 1 or 2, characterized in that said flighting (16) comprises a plurality of segments (21-24/25-28) equally spaced on said tube (15).

4. A row crop attachment according to any of the preceding claims, characterized in that said auger (14) comprises a first section on one side of said main frame and a second section on the other side of said main frame, said first section including first flighting (21-24) that terminates in the centre portion of said tube (15), and said second section including second flighting (25-28) that terminates in the centre portion and which is wound in reverse to the flighting (21-24) of said first section.

5. A row crop attachment according to Claim 4, characterized in that said centre portion of said tube (15) is forwardly aligned with said crop outlet (51), said first flighting (21-24) terminates axially spaced from said second flighting (25-28), and a plurality of feed elements (31) extend from said centre portion between said first flighting (21-24) and said second flighting (25-28) for urging cut crop material toward said crop outlet (51).

6. A row crop attachment according to Claim 5, characterized in that said feed elements (31) are mounted transversely on said tube (15) and each element (31) extends radially and adjacent one of said flighting segments (21-28).

7. A row crop attachment according to any of the preceding claims, characterized in that said transverse cutting assembly (34) is mounted directly below said auger tube (15).

8. A row crop attachment according to any of the preceding claims, characterized in that said stalk engaging elements include a plurality of laterally aligned stalk engaging elements (35, 36) spaced equally across the attachment 10.

9. A row crop attachment according to any of the preceding claims, characterized in that said stalk engaging elements (35, 36) extend forwardly of the flighting (16) of said auger (14).

10. A row crop attachment according to any of the preceding claims, characterized in that said attachment (10) further comprises a floor (32) mounted rearwardly of and below said auger (14) and terminating rearward of said cutting assembly (34) for cooperating with said flighting (16) to guide cut row crop material to said crop outlet (51).

11. A row crop attachment according to any of the preceding claims, characterized in that said grasping means (41, 42) are operatively associated with said flighting (16) whereby the stalks of the row crop material are continuously grasped subsequent to cutting, to aggressively urge said cut crop material in a rearward and transverse direction toward said crop outlet (51).

12. A row crop attachment according to any of the preceding claims, characterized in that said grasping means (41, 42) are mounted rearward of said stalk engaging elements (35, 36), for cooperating with said flighting (16) to grasp said lower stalk portions of said crop material.

13. A row crop attachment according to any of the preceding claims, characterized in that said grasping means (41, 42) include a surface element (46) spaced a predetermined distance from the path of the outer edge of said flighting (16), said surface element (46) disposed between said cutting assembly (34) and said auger (14) for grasping said lower portion of crop material in cooperation with said flighting (16).

14. A row crop attachment according to claim 13, characterized in that said predetermined distance is equal to the approximate diameter of a stalk of crop material.

15. A row crop attachment according to claim 13 or 14, characterized in that said surface element (46) extends in a direction which is inclined to the direction of travel of the forage harvester.

16. A row crop attachment according to claim 15, characterized in that said surface element (46) is inclined to said direction of travel at an angle which is substantially equal to the pitch angle of said flighting (16).

17. A row crop attachment according to any of the claims 13 to 16, characterized in that said surface element (46) is above said cutting assembly (34) to grasp said lower portion of said crop material before, during and after cutting.

18. A row crop attachment according to any of the claims 13 to 17, when appended to claim 10, characterized in that said surface element (46) is flat and extends between said stalk engaging elements (35, 36) and said floor (32).

## Patentansprüche

1. Reihenfrucht-Anbaugerät (10) für einen ein Feld überquerenden Feldhäcksler mit einem Erntematerial-Einlaß zur Aufnahme von geschnittenem Reihenfrucht-Material, das einen unteren Stengelabschnitt und einen oberen Stengelabschnitt umfaßt, wobei das Reihenfrucht-Anbaugerät (10) folgendes umfaßt:
einen Hauptrahmen zur Befestigung an dem Feldhäcksler, wobei der Hauptrahmen einen Erntematerial-Auslaß (51) zum Einbau benachbart zu dem Erntematerial-Einlaß zur Aufnahme von gemähtem Reihenfrucht-Erntematerial einschließt,
eine Förderschnecke (14), die auf dem Hauptrahmen allgemein quer zur Bewegungsrichtung des Feldhäckslers befestigt ist,
Einrichtungen zum Drehen der Förderschnecke (14),
wobei die Förderschnecke (14) ein Rohr (15) und eine auf dem Rohr befestigte Beschaufelung (16) zum Drücken des oberen Teils des aufrechtstehenden Reihenfrucht-Erntematerials nach unten und in Querrichtung aufweist, wenn das Anbaugerät (10) über ein Feld bewegt wird, auf dem die Reihen von Erntematerial stehen, und
eine querverlaufende Schneidbaugruppe (34), die Schneideinrichtungen zum Schneiden des unteren Stengelabschnittes des aufrechtstehenden Reihenfrucht-Erntematerials einschließt und die unterhalb des Schneckenförderers (14) befestigt ist,
Stengeleingriffselemente (35, 36), die in Vorwärtsrichtung vor der Schneidbaugruppe (34) befestigt sind, um mit dem unteren Stengelabschnitt in Eingriff zu kommen und um den unteren Stengelabschnitt zu den Schneideinrichtungen zu führen, und die unterhalb des Schneckenförderers (14) befestigt sind, um mit der Beschaufelung (16) zusammenzuwirken, um den unteren Stengelabschnitt zu den Schneideinrichtungen zu führen, wenn die Förderschnecke (14) in einer Richtung gedreht wird, in der das Erntematerial nach unten und in Querrichtung in Richtung auf den Erntematerial-Auslaß (51 gedrückt wird,
wobei das Anbaugerät dadurch gekennzeichnet ist, daß es weiterhin Einrichtungen (41, 42) zum Erfassen der unteren Teile des aufrechtstehenden Reihenfrucht-Erntematerials unter Bedingungen umfaßt, unter denen die Stengeleingriffselemente (35, 36) mit der Beschaufelung (16) zusammenwirken, um die unteren Abschnitte des aufrechtstehenden Reihenfrucht-Erntematerials zu den Schneideinrichtungen zu führen.

2. Reihenfrucht-Anbaugerät nach Anspruch 1, dadurch gekennzeichnet, daß sich die Außenkante der Beschaufelung (16) auf einer zylindrischen Bahn bewegt, und daß die sich in Querrichtung erstreckende Schneidbaugruppe (34) rückwärts von dem am weitesten vorne liegenden Teil der zylindrischen Bahn angeordnet ist.

3. Reihenfrucht-Anbaugerät nach Anspruch 1 oder 2, dadurch gekennzeichnet, daß die Beschaufelung (16) eine Mehrzahl von Segmenenten (21-24/25-28) aufweist, die mit gleichem Abstand auf dem Rohr (15) angeordnet sind.

4. Reihenfrucht-Anbaugerät nach einem der vorhergehenden Ansprüche, dadurch gekennzeichnet, daß die Förderschnecke (14) einen ersten Abschnitt auf einer Seite des Hauptrahmens und einen zweiten Abschnitt auf der anderen Seite des Hauptrahmens aufweist, daß der erste Abschnitt eine erste Beschaufelung (21-24) einschließt, die im Mittelteil des Rohres (15) endet, und daß der zweite Abschnitt eine zweite Beschaufelung (25-28) einschließt, die in dem Mittelteil endet und die eine Windungsrichtung entgegengesetzt zu der Beschaufelung (21-24) des ersten Abschnittes aufweist.

5. Reihenfrucht-Anbaugerät nach Anspruch 4, dadurch gekennzeichnet, daß der Mittelteil des Rohres (15) in Vorwärtsrichtung mit dem Erntematerial-Auslaß (51) ausgerichtet ist, daß die erste Beschaufelung (21-24) in axialem Abstand von der zweiten Beschaufelung (25-28) endet und daß sich eine Vielzahl von Zuführungselementen (31) von dem Mittelteil zwischen der ersten Beschaufelung (21-24) und der zweiten Beschaufelung (25-28) erstreckt, um geschnittenes Erntematerial in Richtung auf den Erntematerial-Auslaß (51) zu drücken.

6. Reihenfrucht-Anbaugerät nach Anspruch 5, dadurch gekennzeichnet, daß die Zuführungselemente (31) in Querrichtung auf dem Rohr (15) befestigt sind, und daß sich jedes Element (31) in Radialrichtung und benachbart zu einem der Beschaufelungssegmente (21-28) erstreckt.

7. Reihenfrucht-Anbaugerät nach einem der vorhergehenden Ansprüche, dadurch gekennzeichnet, daß die sich in Querrichtung erstreckende Schneidbaugruppe (34) direkt unterhalb des Schneckenförderer-Rohres (15) befestigt ist.

8. Reihenfrucht-Anbaugerät nach einem der vorhergehenden Ansprüche, dadurch gekennzeichnet, daß die Stengeleingriffselemente eine Vielzahl von seitlich ausgerichteten Stengeleingriffselementen (35, 36) einschließen, die mit gleichem Abstand über das Anbaugerät (10) hinweg angeordnet sind.

9. Reihenfrucht-Anbaugerät nach einem der vorhergehenden Ansprüche, dadurch gekennzeichnet, daß sich die Stengeleingriffselemente (35, 36) in Vorwärtsrichtung der Beschaufelung (16) der Förderschnecke (14) erstrecken.

10. Reihenfrucht-Anbaugerät nach einem der vorhergehenden Ansprüche, dadurch gekennzeichnet, daß das Anbaugerät (10) weiterhin einen Boden (32) aufweist, der rückwärts von und unterhalb der Förderschnecke (14) befestigt ist und rückwärts von der Schneidbaugruppe (34) endet, um mit der Beschaufelung (16) zusammenzuwirken, um geschnittenes Reihenfrucht-Erntematerial zu dem Erntematerial-Auslaß (51) zu führen.

11. Reihenfrucht-Anbaugerät nach einem der vorhergehenden Ansprüche, dadurch gekennzeichnet, daß die Erfassungseinrichtungen (41, 42) betriebsmäßig der Beschaufelung (16) derart zugeordnet sind, daß die Stengel des Reihenfrucht-Erntematerials kontinuierlich nachfolgend zu dem Mähen erfaßt werden, um das gemähte Erntematerial aggressiv in einer Rückwärts- und Querrichtung in Richtung auf den Erntematerial-Auslaß (51) zu bewegen.

12. Reihenfrucht-Anbaugerät nach einem der vorhergehenden Ansprüche, dadurch gekennzeichnet, daß die Erfassungseinrichtungen (41, 42) rückwärts von den Stengeleingriffselementen (35, 36) befestigt sind, um mit der Beschaufelung (16) zusammenzuwirken, um die unteren Stengelabschnitte des Erntematerial zu erfassen.

13. Reihenfrucht-Anbaugerät nach einem der vorhergehenden Ansprüche, dadurch gekennzeichnet, daß die Erfassungseinrichtungen (41, 42) ein Oberflächenelement (46) einschließen, das einen vorgegebenen Abstand von der Bahn der Außenkante der Beschaufelung (16) aufweist, wobei das Oberflächenelement (46) zwischen der Schneidbaugruppe (34) und der Förderschnecke (14) angeordnet ist, um den unteren Abschnitt des Erntematerials im Zusammenwirken mit der Beschaufelung (16) zu erfassen.

14. Reihenfrucht-Anbaugerät nach Anspruch 13, dadurch gekennzeichnet, daß der vorgegebene Abstand gleich dem angenäherten Durchmesser eines Stengels des Erntematerials ist.

15. Reihenfrucht-Anbaugerät nach Anspruch 13 oder 14, dadurch gekennzeichnet, daß sich das Oberflächenelement (46) in einer Richtung erstreckt, die gegenüber der Betriebsbewegungsrichtung des Feldhäckslers geneigt ist.

16. Reihenfrucht-Anbaugerät nach Anspruch 15, dadurch gekennzeichnet, daß das Oberflächenelement (46) gegenüber der Bewegungsrichtung unter einem Winkel geneigt ist, der im wesentlichen gleich dem Steigungswinkel der Beschaufelung (16) ist.

17. Reihenfrucht-Anbaugerät nach einem der Ansprüche 13 bis 16, dadurch gekennzeichnet, daß das Oberflächenelement (46) oberhalb der Schneidbaugruppe (34) liegt, um den unteren Abschnitt des Erntematerials vor, während und nach dem Schneiden zu erfassen.

18. Reihenfrucht-Anbaugerät nach einem der Ansprüche 13 bis 17 unter Rückbeziehung auf Anspruch 10, dadurch gekennzeichnet, daß das Oberflächenelement (46) eben ist und sich zwischen den Stengeleingriffselementen (35, 36) und dem Boden (32) erstreckt.

## Revendications

1. Accessoire (10) pour matériau de récolte en lignes destiné à une récolteuse de fourrage se déplaçant dans un champ et possédant un orifice d'introduction de matériau de récolte pour réceptionner le matériau de récolte fauché comprenant une partie inférieure de tige et une partie supérieure de tige, ledit accessoire (10) pour matériau de récolte en lignes comprenant:
un châssis principal conçu pour être fixé à ladite récolteuse de fourrage, ledit châssis principal comprenant une sortie de matériau de récolte (51) à installer à côté dudit orifice d'introduction de matériau de récolte destiné à réceptionner le matériau de récolte fauché;
une vis (14) montée sur ledit châssis principal, généralement transversale à la direction de déplacement de la récolteuse de fourrage;
un moyen destiné à mettre ladite vis en rotation (14);
ladite vis (14) comprenant un tube (15) et un hélicoïde (16) monté sur ledit tube pour contraindre la partie supérieure du matériau de récolte sur pied vers le bas et transversalement, lorsque ledit accessoire est déplacé dans un champ dans lequel des lignes de matériau de récolte sont sur pied; et
un ensemble transversal de fauchage (34) comprenant un moyen de fauchage pour couper la partie inférieure de tige dudit matériau de récolte sur pied, et monté sous ladite vis (14);
des éléments d'engagement de tiges (35, 36), montés à l'avant dudit ensemble de fauchage (34) et destinés à entrer en contact avec la partie inférieure des tiges et à guider ladite partie inférieure de tiges vers ledit moyen de fauchage, et montés sous ladite vis (14) afin de s'associer avec ledit hélicoïde (16) pour guider ladite partie inférieure de tige vers ledit moyen de fauchage dans la situation où ladite vis (14) est mise en rotation dans un sens afin de contraindre le matériau de récolte vers le bas et transversalement vers ledit orifice de sortie (51);
ledit accessoire étant caractérisé en qu'il comprent en outre des moyens de préhension (41, 42) desdites parties inférieures de matériau de récolte sur pied dans la situation où lesdits éléments (35, 36) d'engagement de tiges s'associent avec ledit hélicoïde (16) pour guider les parties inférieures dudit matériau de récolte sur pied vers ledit moyen de fauchage.

2. Accessoire pour matériau de récolte en lignes selon la revendication 1, caractérisé en ce que le bord extérieur dudit hélicoïde (16) se déplace suivant un trajet cylindrique, et que ledit ensemble transversal de fauchage (34) est situé à l'arrière de la partie la plus frontale dudit trajet cylindrique.

3. Accessoire pour matériau de récolte en lignes selon la revendication 1 ou 2, caractérisé en ce que ledit hélicoïde (16) comprend une pluralité de segments (21-24/25-28) équidistants sur ledit tube (15).

4. Accessoire pour matériau de récolte en lignes selon l'une quelconque des revendications précédentes, caractérisé en ce que ladite vis (14) comprend une première section d'un côté dudit châssis principal et une seconde section de l'autre côté dudit châssis principal, ladite première section comprenant un premier hélicoïde (21-24) se terminant à la partie centrale du tube (15), et ladite seconde section comprenant un second hélicoïde (25-28) se terminant à la partie centrale et étant enroulé inversement par rapport à l'hélicoïde (21-24) de ladite première section.

5. Accessoire pour matériau de récolte en lignes selon la revendication 4, caractérisé en ce que ladite partie centrale dudit tube (15) est alignée vers l'avant par rapport à ladite sortie (51) de matériau de récolte, ledit premier hélicoïde (21-24) se termine avec un écart axial par rapport audit second hélicoïde (25-28), et une pluralité d'éléments d'alimentation (31) s'étend à partir de ladite partie centrale, entre ledit premier hélicoïde (21-24) et ledit second hélicoïde (25-28) pour contraindre le matériau de récolte fauché vers ladite sortie de matériau de récolte (51).

6. Accessoire pour matériau de récolte en lignes selon la revendication 5, caractérisé en ce que lesdits éléments d'alimentation (31) sont montés transversalement sur ledit tube (15) et que chaque élément (31) s'étend radialement et à proximité de l'un desdits segments d'hélicoïde (21-28).

7. Accessoire pour matériau de récolte en lignes selon l'une quelconque des revendications précédentes, caractérisé en ce que ledit ensemble transversal de fauchage (34) est monté directement sous le tube (15) de vis.

8. Accessoire pour matériau de récolte en lignes selon l'une quelconque des revendications précédentes, caractérisé en ce que lesdits éléments d'engagement de tiges comprennent une pluralité d'éléments d'engagement (35, 36) de tiges alignés latéralement et équidistants le long de l'accessoire 10.

9. Accessoire pour matériau de récolte en lignes selon l'une quelconque des revendications précédentes, caractérisé en ce que lesdits éléments d'engagement (35, 36) de tiges s'étendent vers l'avant de l'hélicoïde (16) de ladite vis (14).

10. Accessoire pour matériau de récolte en lignes selon l'une quelconque des revendications précédentes, caractérisé en ce que ledit accessoire (10) comprend en outre un fondement (32) monté à l'arrière de ladite vis (14) et sous celle-ci, et se terminant à l'arrière dudit ensemble de fauchage (34) afin de s'associer audit hélicoïde (16) pour guider le matériau de récolte fauché vers ladite sortie (51) de matériau de récolte.

11. Accessoire pour matériau de récolte en lignes selon l'une quelconque des revendications précédentes, caractérisé en ce que lesdits moyens de préhension (41, 42) sont associés fonctionnellement avec ledit hélicoïde (16) de telle manière que les tiges du matériau de récolte en lignes sont saisies continuellement après le fauchage, pour contraindre fortement ledit matériau de récolte fauché dans une direction arrière et transversale vers ladite sortie (51) de matériau de récolte.

12. Accessoire pour matériau de récolte en lignes selon l'une quelconque des revendications précédentes, caractérisé en ce que lesdits moyens de préhension (41, 42) sont montés à l'arrière desdits éléments d'engagement (35, 36) de tiges afin de s'associer audit hélicoïde (16) pour saisir lesdites parties inférieures de tiges du matériau de récolte.

13. Accessoire pour matériau de récolte en lignes selon l'une quelconque des revendications précédentes, caractérisé en ce que lesdits moyens de préhension (41, 42) comprennent un élément de surface (46) écarté d'une distance prédéterminée à partir du trajet du bord extérieur dudit hélicoïde (16), ledit élément de surface (46) étant disposé entre ledit ensemble de fauchage (34) et ladite vis (14) afin de saisir ladite partie inférieure du matériau de récolte en association avec ledit hélicoïde (16).

14. Accessoire pour matériau de récolte en lignes selon la revendication 13, caractérisé en ce que ladite distance prédéterminée est égale au diamètre approximatif d'une tige de matériau de récolte.

15. Accessoire pour matériau de récolte en lignes selon la revendication 13 ou 14, caractérisé en ce que ledit élément de surface (46) s'étend dans la direction de déplacement de la récolteuse de fourrage.

16. Accessoire pour matériau de récolte en lignes selon la revendication 15, caractérisé en ce que ledit élément de surface (46) est incliné par rapport à ladite direction de déplacement sous un angle qui est substantiellement égal à l'angle de pas dudit hélicoïde (16).

17. Accessoire pour matériau de récolte en lignes selon l'une quelconque des revendications 13 à 16, caractérisé en ce que ledit élément de surface (46) se trouve au-dessus dudit ensemble de fauchage (34) afin de saisir ladite partie inférieure dudit matériau de récolte avant, pendant et après le fauchage.

18. Accessoire pour matériau de récolte en lignes selon l'une quelconque des revendications 13 à 17, lorsqu'elle se rapporte à la revendication 10, caractérisé en ce que ledit élément de surface (46) est plan et s'étend entre lesdits éléments d'engagement (35, 36) de tiges et ledit fondement (32).
